# EUROPEAN PATENT APPLICATION

(11) **EP 2 674 284 A1**
(43) Date of publication of application: **18.12.2013**
(21) Application number: 13170872.9
(22) Date of filing: 06.06.2013
(51) Int. Cl.: B29C 67/24

(54) **Improvements in the manufacture of items such as sinks**

(30) Priority: 06.06.2012 GB 201209970
(71) Applicant: Astracast PLC, Bradford West Yorkshire BD4 6SE (GB)
(72) Inventor: Burrows, Robert David, Leeds, West Yorkshire LS19 6EQ (GB)
(74) Representative: Stephenson, Philip

(57) **Abstract**

A method for forming an item such as a sink is disclosed. The method allows the production of an item which is similar in style, configuration and make up to an item formed using a sheet moulded compound pressing process whilst utilising existing closed mould reactive resin injection apparatus thereby reducing the cost of manufacture and providing a manufacturing method which is at least competitive with, and more typically an improvement on, the existing manufacturing method both in terms of quality of the final item and the cost of production.

## Description

The invention which is the subject of the application relates to a method of manufacture of items and, in particular, but not necessarily exclusively, the manufacture of sinks of the type which may be used primarily, but again not exclusively, as sinks for use in the kitchen.

Sinks for use in the kitchen will be described hereonin for ease of reference but it should be appreciated that such description is non-limiting and the method described may be utilised to advantage in the manufacture of other forms of sinks and indeed other items, and such possible uses are incorporated herein.

Sinks for use in the kitchen typically comprise two integrally formed portions, a first portion in which one or more bowls are formed, said bowl having an aperture at the base for location with a drainage pipe and typically an overflow aperture located adjacent the top edge of the bowl. To one side of the bowl there is provided the second portion which is of a relatively planer form and which is designed and shaped to include a series of drainage channels such that items which have been washed in the sink can be placed onto the second portion and allowed to dry with any excess water passing along the drainage channels and back into the sink. This form of sink is well known. Conventionally the sinks were originally formed of metal to provide the two desired portions as described.

The formation of the kitchen sinks using metal forming has always had a market but the different appearances of kitchen sinks which can be created using metal is limited. As a result, another method of forming kitchen sinks has been developed in which a composite material including particles of granite or other hard wearing substances, and/or particles of metal and a resin in which the particles are suspended and held, is used. The aggregate material is then injected into a casting mould and the composite material solidified so as to form the kitchen sink to the required shape. This form of casting is referred to as closed mould reactive resin injection moulding and is conventionally used in the formation of kitchen sinks from the composite material which includes granite and/or other hard wearing particles.

Typically a mould is required to be formed for each design which is to be manufactured and the moulds can then be selected to be used in the common casting apparatus.

While the casting method which has been used has been very commercially successful, it is found that the process is relatively expensive and hence the sinks which are formed are expensive. As a result of this and despite the attractive products which can be achieved, alternative methods of manufacture have been developed and are now used to produce a significant amount of sink products.

The more recent manufacturing method utilises a Sheet Moulded Compound (SMC) in which a relatively thin sheet of, typically reinforced, polyester material is prepared. In one example, the sheet material is formed and cured and passed to a die on which heat and pressure are applied to cause the sheet material to take the form of the die and hence form the kitchen sink to the required shape. It will be appreciated therefore that the material used to form the item is relatively thin and is formed as a sheet material prior to being formed to the required shape in the die. This results in a relatively lightweight formed item but the process can allow relatively high volume production rates to be achieved and can be cost effective and, although the finished product can be inferior to that achieved using the conventional casting process, the quality is acceptable to such an extent that the manufacture of kitchen sinks using this process rather than the conventional casting process is increasingly popular commercially. However, for existing manufacturers who have used the conventional casting process, the adoption of this new process would mean that the existing moulds and apparatus used in the casting process would have to be discarded which represents a significant loss and this, in conjunction, with the expense of purchasing apparatus to allow the SMC process to be used represents a significant expense to those manufacturers.

The aim of the present invention is therefore to provide a method which allows casting apparatus used in the manufacture of sinks, and indeed other items, to be used in such a way as to allow the quality of the product formed to be at least as good if not better than comparable items formed using the SMC process whilst allowing the cost of manufacture to be reduced in contrast to the conventional casting process. A further aim is to provide a method which allows the utilisation of moulds which have been previously been developed for use in the conventional casting process.

In a first aspect of the invention there is provided a method of forming an item using moulding apparatus, said method including the steps of preparing a composite material in a fluid form, introducing the composite material in the fluid state into a mould suitable to form the item of the required shape and wherein the composite material includes fibres, at least one filler material and at least one resin and once the resin is cured the item is formed and can be released from the mould.

Typically the mould is of a type suitable for use with a closed mould reactive resin injection apparatus.

Typically the transition of the fluid composite material into the final moulded product is performed in the closed mould reactive resin injection apparatus and the composite material, when in the fluid state, is injected into the mould.

In one embodiment the fibres are inert reinforcement fibres..

In one embodiment the fibres are of a length in the range of 1-12mm and a diameter in the range of 6-38um. Typically the fibres are provided in the composite material in a concentration of 0.5-20%.

In one embodiment the inert reinforcement fibres are any or any combination of carbon fibres, glass fibres, basalt fibres and/or insoluble polymer fibres such as polypropylene or nylon.

Preferably the filler is mineral and an inert material.

Typically the filler has a particle size of predominantly 10um to 3mm and yet further is typically provided in a concentration in the range of 0.5-80%. In one embodiment the filler is silica sand or alternatively could be calcium carbonate.

In one embodiment the resin which is used is a reactive unsaturated organic monomer or polymer. In one embodiment the resin can be any or any combination of polyester, poly methacrylate, polystyrene, polyamino-epoxide (Epoxy) and/or polyurethane.

Typically the resin is provided in a concentration in the range of 5-95%.

In a second aspect of the invention there is provided an item formed from a composite material wherein said composite material includes a resin provided in the range of 5-95%, fibre strands provided in the range of 0.5-20% and a filler material provided in the range of 0.5-80%.

In a further aspect of the invention there is provided an item formed utilising the invention as herein described.

In one embodiment the item is a sink and, more typically, is a sink comprising a portion in which at least one bowl is formed, and a portion which acts as a drainage portion.

In one embodiment the mould which is used to receive the composite material and form the same is a closed mould casting cavity with a depth in the range of 1-20mm.

Typically the formation of the composite material into the finished item is performed under pressure applied to the mould in the range of 0.1-100 Bar.

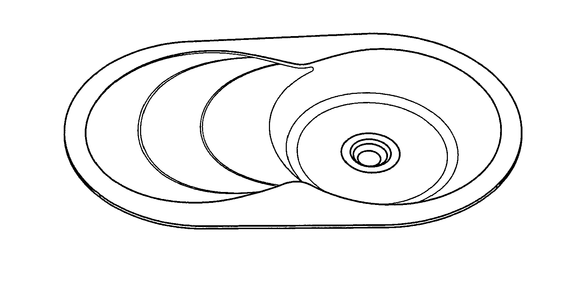

A specific embodiment of the invention is now described with reference to Figure 1 which illustrates one example of a sink manufactured using the method and apparatus in accordance with the invention.

The first step of the method is to form the composite material which is to be used to form the invention and in accordance with the invention the composite material includes a filler material, a resin and strands of inert reinforcement fibres interspersed through the same.

The composite material, when prepared, is provided in a fluid state and is then injected into a mould for use in a closed mould reactive resin injection moulding apparatus in which pressure is applied to the composite material whilst in the mould and the composite material is retained in the mould until the resin has cured.

Once cured, the item which has been formed can be released from the mould and a further finishing process can be performed on the same as required.

A specific example of the process in accordance with the invention is now provided in which the following material was used:
63% fine 20-100um silica sand filler (CAS-471-34-1)
2% 13um / 3mm Dry Use Chopped Strand fibreglass
1% stearic acid - mould release (CAS-57-11-4)
2% Di tertiary-butylcyclohexyl peroxydicarbonate (CAS-15520-11-3) - Thermal catalyst/initiator
32% Polyester resin

The material was placed in a casting mould of the type previously used for the casting of granite containing material. The mould had an average 5mm mould cavity and a closing pressure of 0.5 Bar was used. The filling of the mould with the material was performed at temperature of 65 degrees Celsius. The reaction of the material in the mould was performed at a temperature of 80 degrees Celsius and the material was then cured at a temperature of 105 degrees Celsius. This was performed in a 40 minute cycle.

The sink which was produced was similar in style, configuration and make up to the form of sink produced using the SMC pressing process described previously. Indeed the sinks of this type have to meet specific standards such as the EN performance standard for domestic kitchen sinks EN13310, and a sink 2 manufactured in accordance with the invention is shown in Figure 1 in which the same includes a bowl portion 4 and a drainage portion 6 in this embodiment and which is formed of the material mixture as described previously which is in a fluid state when introduced into the mould as described.

Furthermore, the test results in relation to EN13310 are shown below and which illustrate that the sink manufactured in accordance with this invention meet the requirements of that test which are applicable to sinks of this type.

| **Procedure** | **EN13310:2003 Test** | | | **Remarks** |
|---|---|---|---|---|
| **Draining of water** | **Page 9** | **Drainer and bowl** | **Pass /Fail** | N/a |
| | **5.2** | | | |
| **Load stability** | **Page 9** | **150 kg for 1h** | **Pass /Fail** | N/a |
| | **5.3** | **Wall hung sink only** | | |
| **Resistance to dry heat** | **Page 9** | **Hot oil** | pass **/Fail** | |
| | **5.3** | **(Not applicable for ceramic or stainless steel)** | | |
| **Resistance to Staining** | **Page 13** | **Acids Alkalines** | Pass **/Fail** | |
| | **5.5** | **Alcohols, Bleaches, Salts** | | |
| **Resistance to Scratching** | **Page 15** | **Diamond blade** | Pass **/Fail** | |
| | **5.6** | **(Not applicable for ceramic or stainless steel)** | | |
| **Resistance to Abrasion** | **Page 16** | **Sanding disc** | Pass **/Fail** | |
| | **5.7** | **(Not applicable for ceramic or stainless steel)** | | |
| **Resistance to Temp change** | **Page 10** | **90oC/10oC** | Pass **/Fail** | |
| | **5.4** | **(1000 cycles on composite/ plastic 5 cycles on ceramic)** | | |
| **Flow rate of overflow** | **Page 9** | **Overflow** | N/a | N/a |
| | **4.9** | **12 ltrs / m** | | |

In accordance with the invention there is provided a method which can be utilised in the manufacture of items such as sinks for use in kitchens utilising existing apparatus whilst reducing the cost of manufacture and thereby achieving a manufacturing method which is at least competitive with, and more typically an improvement on, the existing manufacturing method both in terms of quality of the final item and the cost of production.

## Claims

1. A method of forming an item using moulding apparatus, said method including the steps of preparing a composite material in a fluid form, introducing the composite material in the fluid state into a mould suitable to form the item of the required shape and wherein the composite material includes fibres, at least one filler material and at least one resin and once the resin is cured the item is formed and can be released from the mould.

2. A method according to claim 1 wherein the mould is of a type suitable for use with a closed mould reactive resin injection apparatus.

3. A method according to claim 2 wherein the transition of the fluid composite material into the final moulded product is performed in the closed mould reactive resin injection apparatus.

4. A method according to any of the preceding claims wherein the composite material, when in the fluid state, is injected into the mould.

5. A method according to claim 1 wherein the fibres are inert reinforcement fibres.

6. A method according to claim 5 wherein the fibres are of a length in the range of 1-12mm and a diameter in the range of 6-38um.

7. A method according to any of claims 5 and 6 wherein the fibres are provided in the composite material in a concentration of 0.5-20%.

8. A method according to claim 1 wherein the filler is a mineral and is substantially inert.

9. A method according to claim 9 wherein the filler has a particle size of predominantly 10um to 3mm.

10. A method according to any of claims 8 and 9 wherein the filler is provided in a concentration in the range of 0.5-80%.

11. A method according to claim 1 wherein the resin is a reactive unsaturated organic monomer or polymer.

12. A method according to claim 11 wherein the resin is any, or any combination, of polyester, poly methacrylate, polystyrene, polyamino-epoxide (Epoxy) and/or polyurethane.

13. A method according to any of claims 11 and 12 wherein the resin is provided in a concentration in the range of 5-95%.

14. A method according to any of the preceding claims wherein the item formed is a sink.

15. A method according to claim 1 wherein the mould which is used to receive the composite material and form the same is a closed mould casting cavity with a depth in the range of 1-20mm.

16. A method according to any of the preceding claims wherein the formation of the composite material into the finished item is performed under pressure applied to the mould in the range of 0.1-100 Bar.

17. A sink formed using the method of any of claim 1-16.

18. An item formed in a mould from a composite material wherein said composite material includes a resin provided in the range of 5-95%, inert reinforcement fibre strands provided in the range of 0.5-20% and a filler material provided in the range of 0.5-80%.

19. An item according to claim 18 wherein the item is a sink.

20. An item according to claim 19 wherein the sink comprises a portion in which at least one bowl is formed.
